# EUROPÄISCHE PATENTSCHRIFT

(11) **EP 1 977 960 B1**
(45) Veröffentlichungstag und Bekanntmachung des Hinweises auf die Patenterteilung: **20.10.2010**
(21) Anmeldenummer: 08010466.4
(22) Anmeldetag: 13.07.2005
(51) Int. Cl.: B62D 25/14, B62D 21/03, B60R 16/02

(54) **Querträger für ein Kraftfahrzeug**
Cross-member for a motor vehicle
Traverse pour un véhicule automobile

(30) Priorität: 15.07.2004 DE 202004011120 U
(43) Veröffentlichungstag der Anmeldung: 08.10.2008
(62) Teilanmeldung aus: 05015249.5
(73) Patentinhaber: DURA Automotive Body and Glass Systems GmbH, 58840 Plettenberg (DE)
(72) Erfinder: Gerke, Jörg, 59846 Sundern (DE); Levermann, Ulrich, 58809 Neuenrade (DE); Schulte, Martin, 58802 Balve (DE); Heuel, Gerd, 57462 Olpe (DE)
(74) Vertreter: Zinnecker, Armin

(56) Entgegenhaltungen:
- EP-A- 1 742 809
- DE-A1- 10 124 248
- DE-A1-102005 010 161
- DE-A1-102005 011 331

## Beschreibung

Die Erfindung betrifft einen Querträger für ein Kraftfahrzeug.

Ein derartiger Querträger ist aus der DE 102 21 654 A1 bekannt. Er dient dazu, die A-Säulen oder andere Bauteile an den Seiten eines Kraftfahrzeugs miteinander zu verbinden. Der Querträger kann zusätzlich mit dem Tunnel und/oder der Stirnwand verbunden sein.

Aus der EP 0 990 578 A2 ist ein Querträger für ein Kraftfahrzeug bekannt, der zumindest zwei in axialer Verlängerung angeordnete Profilabschnitte unterschiedlichen Querschnitts aufweist, die über eine Teillänge überlappend angeordnet sind. Die Profilabschnitte sind im Überlappungsbereich durch ein stabilisierendes Verbindungsteil miteinander verbunden.

Aus der EP-A-1 742 809 ist ein Querträger mit den Merkmalen des Oberbegriffs des Anspruchs 1 bekannt.

Aufgabe der Erfindung ist es, einen verbesserten Querträger für ein Kraftfahrzeug vorzuschlagen.

Gemäß der Erfindung wird diese Aufgabe durch die Merkmale des Anspruchs 1 gelöst. Ein Abschnitt des Querträgers ist aus zwei Halbschalen gebildet, die miteinander verbunden sind. Dieser Abschnitt befindet sich vorzugsweise auf der Fahrerseite des Kraftfahrzeugs. Die Halbschalen sind vorzugsweise aus Metall. Sie sind vorzugsweise miteinander verschweißt, insbesondere Mag- oder Lasergeschweißt, können aber auch auf andere Weise miteinander verbunden, beispielsweise miteinander verklebt oder vernietet sein. Der Querträger kann zur Aufnahme der Lenksäule, von Befestigungselementen und/oder Anbauteilen dienen.

Die Erfindung ist **dadurch gekennzeichnet, daß** ein Abschnitt des Querträgers ein Rollformprofil (Walzprofil) aufweist. Dieser Abschnitt befindet sich vorzugsweise auf der Beifahrerseite des Kraftfahrzeugs. Vorteilhaft ist es, wenn es sich um ein konstantes Rollformprofil handelt. Das Rollformprofil ist vorzugsweise als Hohlprofil ausgestaltet. Rollformprofile können preiswert hergestellt werden.

Erfindungsgemäß ist das Rollformprofil zu einem Hohlprofil geformt und verschweißt. Hierbei ist es von Vorteil, wenn das Rollformprofil im Rollformprozeß lasergeschweißt ist.

Das Rollformprofil weist vorzugsweise einen Hinterschnitt auf, der vorzugsweise eingewalzt ist. Der Hinterschnitt ist vorzugsweise auf der Rückseite des Rollformprofils vorgesehen. Er kann zur direkten Befestigung von Anbauteilen dienen oder zur Aufnahme eines Clipsystems für Anbauteile. Insbesondere kann durch den Hinterschnitt ein Kabelbaum an dem Rollformprofil befestigt werden. Rollformprofile geben die Möglichkeit, Hinterschnitte im Querschnitt zu fertigen. Dies kann annähernd kostenneutral erfolgen.

Die Halbschalen bilden vorzugsweise ein Kastenprofil. Hierdurch wird die Stabilität, insbesondere die Verwindungssteifigkeit des Querträgers erhöht.

Vorzugsweise ist in dem Querträger ein Einschubteil eingefügt. Das Einschubteil ist vorzugsweise aus Metall. Durch das Einschubteil kann insbesondere ein Durchbruch in dem Querträger geschaffen werden, insbesondere für Komponenten im Cockpit des Kraftfahrzeugs, beispielsweise für eine Kabelverlegung und/oder Luftkanalverlegung.

Eine weitere vorteilhafte Weiterbildung ist dadurch gekennzeichnet, daß das Einschubteil mit den Halbschalen fest verbunden ist. Insbesondere ist das Einschubteil mit den Halbschalen verschweißt. Es kann aber auch auf andere Weise mit den Halbschalen verbunden, insbesondere verklebt oder vernietet sein.

Vorteilhaft ist es, wenn das Einschubteil Flansche aufweist. Die Flansche befinden sich vorzugsweise auf beiden Seiten des Einschubteils.

Vorzugsweise sind die Flansche mit den Halbschalen verbunden. Die Verbindung erfolgt vorzugsweise durch Verschweißen. Es sind dabei auch andere Verbindungsarten möglich, wie beispielsweise Verkleben oder Vernieten.

Eine weitere vorteilhafte Weiterbildung ist dadurch gekennzeichnet, daß das Einschubteil auf einer Seite von außen und auf der anderen Seite von innen an den Halbschalen anliegt. Hierdurch kann das Einschubteil auf besonders einfache Weise mit den Halbschalen bzw. mit dem von den Halbschalen gebildeten Kastenprofil gefügt und verbunden werden. Dies ist besonders dann vorteilhaft, wenn das Einschubteil Flansche aufweist.

Das Rollformprofil kann gebogen sein. Vorzugsweise ist es nachträglich gebogen.

Eine vorteilhafte Weiterbildung ist dadurch gekennzeichnet, daß das Rollformprofil mit den Halbschalen unlösbar verbunden ist. Vorzugsweise ist das Rollformprofil mit den Halbschalen verschweißt. Es kann aber auch auf andere Weise mit den Halbschalen verbunden, insbesondere verklebt oder vernietet sein.

Vorzugsweise umschließen die Halbschalen das Rollformprofil ganz oder teilweise.

Eine weitere vorteilhafte Weiterbildung ist dadurch gekennzeichnet, daß der Querträger eine innendruckumgeformte Tunnelstütze aufweist. Innendruckumgeformte Bauteile gewährleisten einen optimalen Kraftfluß. Dieser kann zur Abstützung im Bodenbereich des Fahrzeugs ausgenutzt werden. Ein Verfahren zum Herstellen eines innendruckumgeformten Bauteils ist aus der DE 199 15 381 A1, auf die Bezug genommen wird, bekannt.

Der Querschnitt der Tunnelstütze wird vorzugsweise zu einem horizontal verlaufenden Abschnitt des Querträgers hin größer.

Eine weitere vorteilhafte Weiterbildung ist dadurch gekennzeichnet, daß der Querträger eine Tunnelstütze aus einem gebogenen Rohr, vorzugsweise einem gebogenen Vierkantrohr, aufweist.

Durch steigende Anforderungen an den Komfort wird durch zusätzliche Komponenten der Bauraum in einem Fahrzeug-Cockpit immer enger. Gleichzeitig werden die Anforderungen an die Stabilität der tragenden Bauteile immer höher, inbesondere die Anforderungen hinsichtlich des Schwingungsverhaltens und des Crashverhaltens. Die vorliegende Erfindung bietet eine technische Lösung für diese gegenläufigen Anforderungen.

Ein Ausführungsbeispiel der Erfindung wird nachstehend anhand der beigefügten Zeichnung im einzelnen erläutert. In der Zeichnung zeigt
- Fig. 1: einen Querträger für ein Kraftfahrzeug in einer perspektivischen Ansicht,
- Fig. 2: einen Querschnitt durch den auf der Fahrerseite liegenden Abschnitt des Querträgers gemäß Fig. 1,
- Fig. 3: einen vergrößerten Ausschnitt aus der Fig. 2,
- Fig. 4: einen Querschnitt durch den auf der Beifahrerseite liegenden Abschnitt des Querträgers gemäß Fig. 1 und

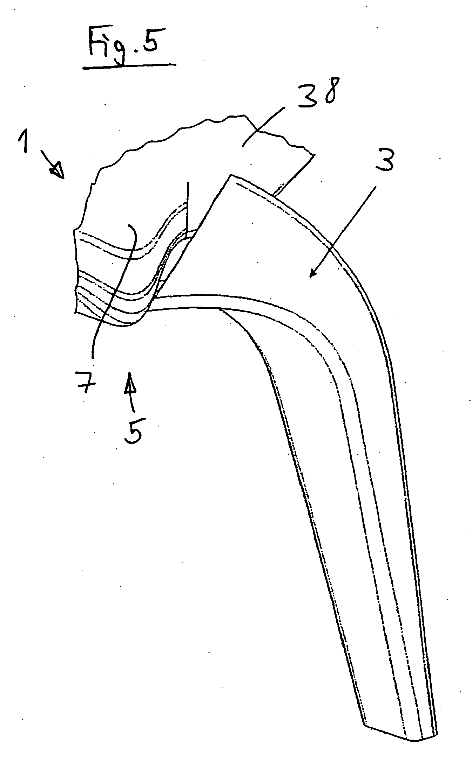

- Fig. 5: die auf der Fahrerseite des Querträgers gemäß Fig. 1 liegende Tunnelstütze in einer vergrößerten Ansicht.

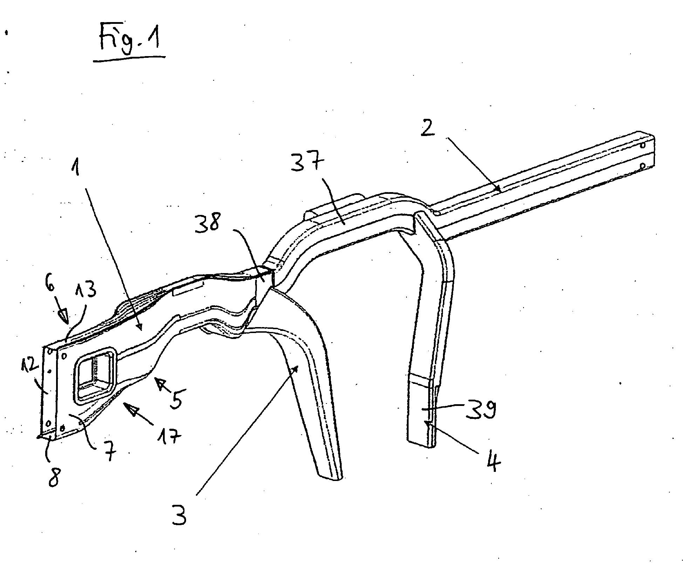

Der in Fig. 1 in einer perspektivischen Ansicht dargestellte Querträger für ein Kraftfahrzeug umfaßt einen ersten Abschnitt 1, der auf der Fahrerseite liegt, einen zweiten Abschnitt 2, der auf der Beifahrerseite liegt und der mit dem ersten Abschnitt 1 verbunden ist, eine erste Tunnelstütze 3 auf der Fahrerseite und eine zweite Tunnelstütze 4 auf der Beifahrerseite.

Der erste Abschnitt 1 des Querträgers wird an seinem linken, äußeren Ende mit der A-Säule (in der Zeichnung nicht dargestellt) auf der Fahrerseite des Kraftfahrzeugs verbunden. An seinem rechten, inneren Ende ist der erste Abschnitt 1 des Querträgers mit dem linken, inneren Ende des zweiten Abschnitts 2 und mit dem oberen Ende der ersten Tunnelstütze 3 verbunden.

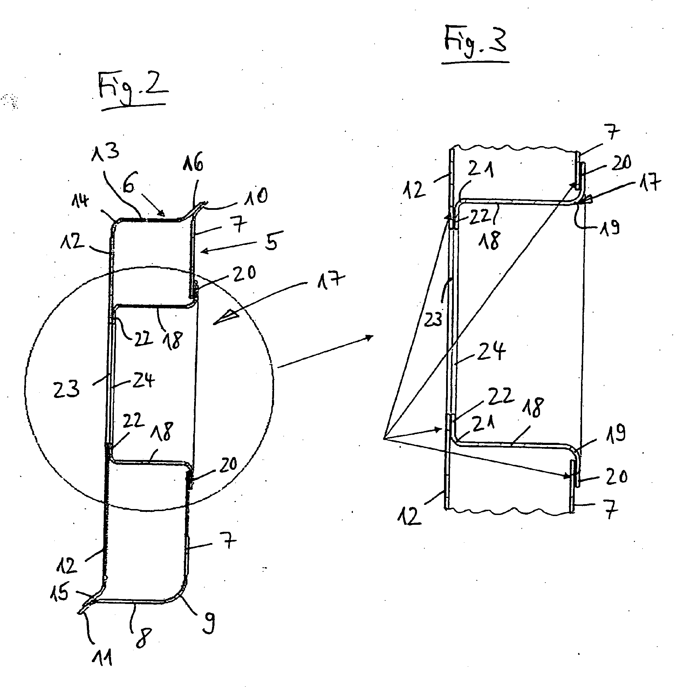

Der erste Abschnitt 1 des Querträgers ist aus zwei Halbschalen 5, 6 gebildet, die miteinander verbunden, nämlich verschweißt, sind, wie aus Fig. 1, 2 und 3 ersichtlich. Die Halbschalen 5, 6, die aus Metall sind, bilden ein Kastenprofil. Die hintere, dem Fahrzeug-Innenraum zugewandte Halbschale 5 weist einen L-förmigen Querschnitt auf, wobei der längere Schenkel 7 im wesentlichen vertikal verläuft und der kürzere Schenkel 8 am unteren Ende des längeren Schenkels 7 unter Bildung einer Abrundung 9 um etwa 90° nach vorne abgekantet ist. Die hintere Halbschale 5 weist am oberen Ende ihres längeren Schenkels 7 einen um etwa 45° nach hinten abgekanteten Flansch 10 auf. Der kürzere Schenkel 8 weist an seinem vorderen Ende einen um etwa 45° nach unten abgekanteten Flansch 11 auf.

Das Profil der vorderen Halbschale 6 ist ebenfalls L-förmig, mit einem längeren Schenkel 12, der vertikal und im wesentlichen parallel zum längeren Schenkel 7 der hinteren Halbschale 5 verläuft, und mit einem kürzeren Schenkel 13, der am oberen Ende des längeren Schenkels 12 unter Bildung einer Abrundung 14 um etwa 90° nach hinten abgekantet ist. Der längere Schenkel 12 ist an seinem unteren Ende mit einem um etwa 45° nach vorne abgekanteten Flansch 15 versehen. Am hinteren Ende des kürzeren Schenkels 13 ist ein um etwa 45° nach oben abgekanteter Flansch 16 vorgesehen.

Die Halbschalen 5, 6 sind an ihren Flanschen 10, 16 und 11, 15 unter Bildung eines Kastenprofils verschweißt. Sie könnten auch verklebt oder vernietet sein.

In den ersten Abschnitt 1 des Querträgers ist ein Einschubteil 17 eingefügt. Zum Einfügen des Einschubteils 17 ist in den längeren Schenkel 7 der hinteren Halbschale 5 eine Öffnung vorgesehen, die eine quadratische Form aufweist und in die das Einschubteil 17 eingesetzt werden kann. Das Einschubteil 17 umfaßt vier jeweils gleich große Seitenwände 18, die ein Quadrat mit abgerundeten Ecken bilden, das etwas kleiner ist als die quadratische Öffnung in dem längeren Schenkel 7.

Die Seitenflächen 18 sind an ihren hinteren Enden unter Bildung von Abrundungen 19 und daran anschließenden Flanschen 20 um etwa 90° jeweils nach außen abgekantet. Die vorderen Enden der Seitenwände 18 sind unter Bildung von Abrundungen 21 und daran anschließenden Flanschen 22 um etwa 90° jeweils nach innen abgekantet. Die Enden der Flansche 22 fluchten mit dem Umriß einer quadratischen Öffnung 23 in dem längeren Schenkel 12 der vorderen Halbschale 6.

Die Flansche 20 sind mit den die Öffnung in dem längeren Schenkel 7 der hinteren Halbschale 5 umgebenden Randbereichen des längeren Schenkels 7 verschweißt. Sie könnten auch verklebt oder vernietet sein. Die Flansche 22 des Einschubteils 17 sind mit den auf der hinteren Seite liegenden, die Öffnung 23 umgebenden Randbereichen des längeren Schenkels 12 der vorderen Halbschale 6 verschweißt. Sie könnten auch verklebt oder vernietet sein.

Die inneren Enden der Flansche 22 bilden eine quadratische Öffnung 24, die mit der Öffnung 23 im längeren Schenkel 12 der vorderen Halbschale 6 kongruent ist. Durch die Öffnungen 23, 24 können Bauteile hindurchgeführt werden, beispielsweise eines oder mehrere Kabel oder ein Luftkanal. Das Einschubteil 17 bietet auf diese Weise die Möglichkeit einer Kabel- oder Luftkanalverlegung durch den Querträger bzw. dessen ersten Abschnitt 1.

Das Einschubteil 17 liegt auf seiner in Fahrzeugrichtung hinteren Seite mit den Flanschen 20 von außen an den Halbschalen an, nämlich an der Halbschale 5. Es liegt auf der anderen, in Fahrzeugrichtung vorderen Seite von innen an den Halbschalen, nämlich der Halbschale 6 an. Durch diese Ausgestaltung kann das Einschubteil 17 auf einfache Weise mit dem von den Halbschalen 5, 6 gebildeten Kastenprofil gefügt und verbunden werden.

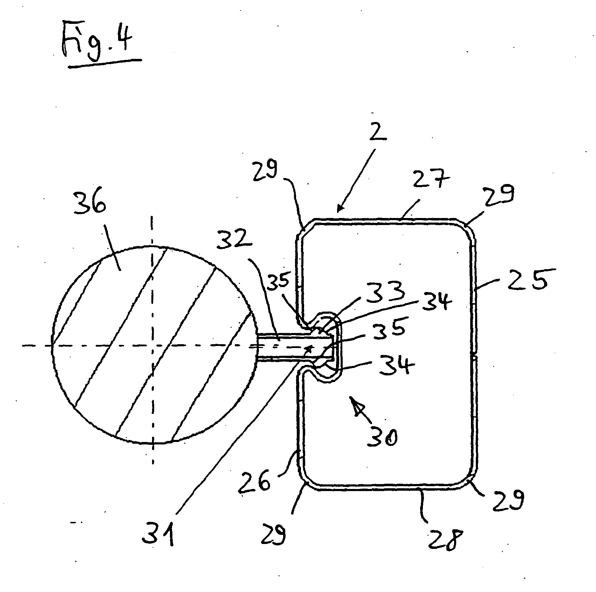

Der zweite Abschnitt 2 des Querträgers weist in der aus Fig. 1 und 4 ersichtlichen Weise eine Rollformprofil auf, das rechteckig ausgebildet ist und aus zwei größeren, vertikalen Schenkeln 25, 26 und zwei kleineren, horizontalen Schenkeln 27, 28 besteht, die über Abrundungen 29 mit den größeren Schenkeln 25, 26 verbunden sind. In den hinteren größeren Schenkel 26 ist ein Hinterschnitt 30 eingewalzt, der die Form eines Schwalbenschwanzes mit abgerundeten Ecken aufweist. Er dient zur Aufnahme eines Clipsystems 31. Das Clipsystem 31 umfaßt ein Verbindungsteil 32, das sich in den Hinterschnitt 30 hineinerstreckt und dessen Außenumfang kleiner ist als die Eingangsöffnung des Hinterschnitts, und ein Verrastungsteil 33, dessen Außenumfang oder zumindest Teile davon größer sind als die Eingangsöffnung des Hinterschnitts 30, wobei äußere Teile des Verrastungsteils 33 elastisch nach innen eindrückbar sind, so daß das Verrastungsteil 33 die Eingangsöffnung des Hinterschnitts 30 durchschreiten kann. Das Verrastungsteil 33 kann an seinem äußeren, dem Hinterschnitt 30 zugewandten Ende eine Einführschräge 34 aufweisen. Es kann auf der gegenüberliegenden Seite ebenfalls eine Einführschräge 35 aufweisen, so daß es mit einer entsprechenden Kraft wieder aus dem Hinterschnitt 30 herausgezogen werden kann. Das Verrastungsteil 33 kann allerdings auch in der Weise ausgestaltet sein, daß es sich in dem Hinterschnitt 30 verhakt und nicht durch eine entsprechende Kraftaufwendung herausgezogen werden kann (in der Zeichnung nicht dargestellt). In diesem Fall kann die Anordnung derart getroffen sein, daß das Verrastungsteil 30 durch ein Werkzeug eindrückbar und aus dem Hinterschnitt 30 herausholbar ist.

Mit dem anderen Ende des Verbindungsteils 32 des Clipsystems 31 ist ein Anbauteil des Kraftfahrzeugs verbunden. In dem dargestellten Ausführungsbeispiel ist dies ein Kabelbaum 36.

Das Rollformprofil des zweiten Abschnitts 2 des Querträgers ist als konstantes Profil ausgestaltet. Die Form und Größe des Profils ist also über die gesamte Länge des zweiten Abschnitts gleich. Das Rollformprofil ist zu einem Hohlprofil geformt und verschweißt. Es ist vorzugsweise direkt im Rollformprozeß lasergeschweißt. Der eingewalzte Hinterschnitt 30 dient zur Aufnahme des Clipsystems 31. Es ist allerdings auch möglich, eines oder mehrere Anbauteile in dem Hinterschnitt 30 unmittelbar zu befestigen.

Das Rollformprofil des zweiten Abschnitts 2 ist in der aus Fig. 1 ersichtlichen Weise gebogen. Diese Biegung erfolgt nachträglich, also nach der Herstellung des Rollformprofils. Das dem ersten Abschnitt 1 zugewandte Ende des zweiten Abschnitts 2, das sich in der Mitte des Fahrzeugs befindet, ist nach oben abgekröpft, so daß ein erhöhter Bereich 37 gebildet wird, der an seinem dem ersten Abschnitt 1 zugewandten Ende wieder nach unten abgekröpft ist.

Das Rollformprofil des zweiten Abschnitts 2 ist in einem Überlappungsbereich 38 mit dem ersten Abschnitt 1 des Querträgers unlösbar verbunden, vorzugsweise verschweißt. Um Überlappungsbereich 38 umschließen die Halbschalen 5, 6 des ersten Abschnitts 1 das Rollformprofil des zweiten Abschnitts 2 ganz oder teilweise.

Die erste Tunnelstütze 3 ist mit den Halbschalen 5, 6 des ersten Abschnitts 1 verbunden. Sie ist mit diesen Halbschalen 5, 6 unlösbar verbunden, nämlich verschweißt. Die Verbindung liegt im Bereich des Überlappungsbereichs 38.

Die erste Tunnelstütze 3 ist durch ein Innendruck-Umformverfahren hergestellt. Der Querschnitt der ersten Tunnelstütze 3 wird zu dem im wesentlichen in horizontaler Richtung verlaufenden ersten Abschnitt 1 des Querträgers hin größer. Die Anbindung der im wesentlichen horizontal verlaufenden Abschnitte 1, 2 zum Tunnel erfolgt demnach durch ein diskontinuierliches Profil, nämlich das Profil der ersten Tunnelstütze 3, welches im oberen Bereich, in dem es an die Halbschalen 5, 6 des ersten Abschnitts 1 angebunden ist, einen deutlich vergrößerten Querschnitt aufweist. Die erste Tunnelstütze 3 dient zur Verbindung der im wesentlichen in horizontaler Richtung verlaufenden ersten und zweiten Abschnitte 1, 2 mit dem Tunnel des Kraftfahrzeugs. Die Querschnittsvergrößerung der ersten Tunnelstütze 3 wird durch das Herstellungsverfahren erzeugt, nämlich das Innendruck-Umformverfahren, durch das die erste Tunnelstütze 3 hergestellt ist. Die erste Tunnelstütze 3 wird durch eingestanzte Löcher oder aufgesetzte Muttern an den Bodenbereich angebunden (in der Zeichnung nicht dargestellt). Sie ist in ihrem oberen Endbereich nach außen, im Ausführungsbeispiel also zur Fahrerseite hin, gebogen.

Die zweite Tunnelstütze 4 ist aus einem gebogenen Rohr hergestellt. Das Rohr hat ein Vierkantprofil. Es ist im oberen Endbereich in Fahrzeugrichtung nach vorne gebogen und an den zweiten Abschnitt 2 des Querträgers angebunden. Das gebogene Vierkantrohr der zweiten Tunnelstütze 4 weist an seinem unteren Ende einen verdrückten Endbereich 39 zur Tunnelbefestigung auf.

Der Querträger bildet eine Verbindung im Kraftfahrzeug zwischen den Anbindepunkten der A-Säulen auf der rechten und linken Seite der Karosserie und dem Tunnelbereich. Er dient zur Aufnahme von Instrumententafel und Anbauteilen im Cockpit. Die Tragstruktur wird aus dem ersten Abschnitt 1 auf der Fahrerseite und dem zweiten Abschnitt 2 auf der Beifahrerseite gebildet. Die Anbindung zum Tunnel erfolgt durch ein im Innendruck-Umformverfahren hergestelltes Profil auf der Fahrerseite, das die erste Tunnelstütze 3 bildet, und ein gebogenes Vierkantrohr auf der Beifahrerseite, das die zweite Tunnelstütze 4 bildet.

## Patentansprüche

1. Querträger für ein Kraftfahrzeug, bei dem ein Abschnitt (1) des Querträgers aus zwei Halbschalen (5, 6) gebildet ist, die miteinander verbunden sind, wobei ein Abschnitt (2) des Querträgers ein Rollformprofil aufweist,
**dadurch gekennzeichnet,**
**daß** das Rollformprofil zu einem Hohlprofil geformt und verschweißt ist.

2. Querträger nach Anspruch 1, **dadurch gekennzeichnet, daß** das Rollformprofil einen vorzugsweise eingewalzten Hinterschnitt (30) aufweist.

3. Querträger nach einem der vorhergehenden Ansprüche, **dadurch gekennzeichnet, daß** die Halbschalen (5, 6) ein Kastenprofil bilden.

4. Querträger nach einem der vorhergehenden Ansprüche, **dadurch gekennzeichnet, daß** in den Querträger ein Einschubteil (17) eingefügt ist.

5. Querträger nach Anspruch 4, **dadurch gekennzeichnet, daß** das Einschubteil (17) mit den Halbschalen (5, 6) fest verbunden ist.

6. Querträger nach Anspruch 4 oder 5, **dadurch gekennzeichnet, daß** das Einschubteil (17) Flansche (20, 22) aufweist.

7. Einschubteil nach Anspruch 6, **dadurch gekennzeichnet, daß** die Flansche (20, 22) mit den Halbschalen (5, 6) verbunden sind.

8. Querträger nach einem der Ansprüche 4 bis 7, **dadurch gekennzeichnet, daß** das Einschubteil (17) auf einer Seite von außen und auf der anderen Seite von innen an den Halbschalen (5, 6) anliegt.

9. Querträger nach einem der vorhergehenden Ansprüche, **dadurch gekennzeichnet, daß** das Rollformprofil gebogen ist.

10. Querträger nach einem der vorhergehenden Ansprüche, **dadurch gekennzeichnet, daß** das Rollformprofil (2) mit den Halbschalen (5, 6) unlösbar verbunden ist.

11. Querträger nach einem der vorhergehenden Ansprüche, **dadurch gekennzeichnet, daß** die Halbschalen (5, 6) das Rollformprofil ganz oder teilweise umschließen.

12. Querträger nach einem der vorhergehenden Ansprüche, **dadurch gekennzeichnet, daß** der Querträger eine innendruckumgeformte Tunnelstütze (3) aufweist.

13. Querträger nach Anspruch 12, **dadurch gekennzeichnet, daß** der Querschnitt der Tunnelstütze (3) zu einem horizontal verlaufenden Abschnitt (1) des Querträgers hin größer wird.

14. Querträger nach einem der vorhergehenden Ansprüche, **dadurch gekennzeichnet, daß** der Querträger eine Tunnelstütze (4) aus einem gebogenen Rohr, vorzugsweise einem gebogenen Vierkantrohr, aufweist.

## Claims

1. Transverse support member for a motor vehicle, in which one section (1) of the transverse support member is formed from two half-shells (5, 6), which are connected to each other, one section (2) of the transverse support member being a rolled section, **characterized in that** the rolled section is shaped and welded to form a hollow section.

2. Transverse support member according to Claim 1, **characterized in that** the rolled section has an undercut (30) preferably rolled into it.

3. Transverse support member according to either of the preceding claims, **characterized in that** the half-shells (5, 6) form a box section.

4. Transverse support member according to one of the preceding claims, **characterized in that** a push-in part (17) is fitted into the transverse support member.

5. Transverse support member according to Claim 4, **characterized in that** the push-in part (17) is fixedly connected to the half-shells (5, 6).

6. Transverse support member according to Claim 4 or 5, **characterized in that** the push-in part (17) has flanges (20, 22).

7. Transverse support member according to Claim 6, **characterized in that** the flanges (20, 22) are connected to the half-shells (5, 6).

8. Transverse support member according to one of Claims 4 to 7, **characterized in that** the push-in part (17) bears against the half-shells (5, 6) from the outside on one side and from the inside on the other side.

9. Transverse support member according to one of the preceding claims, **characterized in that** the rolled section is curved.

10. Transverse support member according to one of the preceding claims, **characterized in that** the rolled section (2) is connected unreleasably to the half-shells (5, 6).

11. Transverse support member according to one of the preceding claims, **characterized in that** the half-shells (5, 6) entirely or partially enclose the rolled section.

12. Transverse support member according to one of the preceding claims, **characterized in that** the transverse support member has a tunnel support (3) deformed by internal pressure.

13. Transverse support member according to Claim 12, **characterized in that** the cross section of the tunnel support (3) becomes larger towards a horizontally running section (1) of the transverse support member.

14. Transverse support member according to one of the preceding claims, **characterized in that** the transverse support member has a tunnel support (4) composed of a curved tube, preferably a curved rectangular tube.

## Revendications

1. Traverse pour un véhicule automobile, dans laquelle une section (1) de la traverse est constituée de deux demi-coques (5, 6) qui sont reliées l'une à l'autre, où une section (2) de la traverse présente un profilé de roulage, **caractérisée en ce que** le profilé de roulage est formé en un profilé creux et est soudé.

2. Traverse selon la revendication 1, **caractérisée en ce que** le profilé de roulage présente une contre-dépouille (30) de préférence laminée.

3. Traverse selon l'une des revendications précédentes, **caractérisée en ce que** les demi-coques (5, 6) forment un profilé en caisson.

4. Traverse selon l'une des revendications précédentes, **caractérisée en ce qu'**une partie d'insertion (17) est insérée dans la traverse.

5. Traverse selon la revendication 4, **caractérisée en ce que** la partie d'insertion (17) est reliée solidement aux demi-coques (5,6).

6. Traverse selon la revendication 4 ou 5, **caractérisée en ce que** la partie d'insertion (17) présente des brides (20, 22).

7. Partie d'insertion selon la revendication 6, **caractérisée en ce que** les brides (20, 22) sont reliées aux demi-coques (5, 6).

8. Traverse selon l'une des revendications 4 à 7, **caractérisée en ce que** la partie d'insertion (17) s'applique sur un côté de l'extérieur et sur l'autre côté de l'intérieur aux demi-coques (5, 6).

9. Traverse selon l'une des revendications précédentes, **caractérisée en ce que** le profilé de roulage est courbé.

10. Traverse selon l'une des revendications précédentes, **caractérisée en ce que** le profilé de roulage (2) est relié inamoviblement aux demi-coques (5, 6).

11. Traverse selon l'une des revendications précédentes, **caractérisée en ce que** les demi-coques (5, 6) entourent le profilé de roulage entièrement ou partiellement.

12. Traverse selon l'une des revendications précédentes, **caractérisée en ce que** la traverse présente un support de tunnel (3) déformé par pression intérieure.

13. Traverse selon la revendication 12, **caractérisée en ce que** la section transversale du support de tunnel (3) s'agrandit vers une section s'étendant horizontalement (1) de la traverse.

14. Traverse selon l'une des revendications précédentes, **caractérisée en ce que** la traverse présente un support de tunnel (4) en un tube courbé, de préférence un tube carré courbé.
